# EUROPEAN PATENT APPLICATION

(11) **EP 1 683 673 A1**
(43) Date of publication of application: **26.07.2006**
(21) Application number: 05425025.3
(22) Date of filing: 21.01.2005
(51) Int. Cl.: B60K 15/063, B60K 13/02

(54) **Integrated tank-air filter assembly for a vehicle, in particular for a tractor**

(71) Applicant: SAME DEUTZ-FAHR GROUP S.p.A., 24047 Treviglio (Bergamo) (IT)
(72) Inventor: Faroni, Aldo, 25073 Bovezzo Brescia (IT)
(74) Representative: Marchitelli, Mauro

(57) **Abstract**

An integrated tank-air filter assembly for a vehicle, in particular for a tractor, comprising:
- a fuel tank (10) having an external wall (46) and a wall (44) defining a cavity (22) for housing the air filter surrounded by said external wall (46), and
- at least one filtering cartridge (56, 58) housed in said cavity (22),
characterised in that the fuel tank (10) comprises two distinct openings (48, 50) for sucking the air to be filtered, each of which puts the inner volume of said cavity (22) in communication with the external environment.

## Description

The present invention relates to an integrated tank-air filter assembly for a vehicle, in particular for a tractor.

An integrated tank-air filter assembly having the features of the preamble of claim 1 is known from document EP-A-468599 of the same applicant. This document describes a fuel tank, in particular for a tractor, provided with a cavity in which the air filter is housed. The air filter comprises two end portions fixed to opposite ends of the cavity of the tank and between which a filter cartridge is housed.

The object of the present invention is to improve the solution known from EP-A-468599 and to provide an integrated tank-air filter assembly that offers better filtering of the air flow and better cleaning features of the filter and that is constituted by a reduced number of components.

According to the present invention this object is achieved by an integrated tank-air filter assembly having the features of claim 1.

Characteristics and advantages of the present invention will become clear from the following detailed description, given by way of example only, with reference to the enclosed drawings, wherein:
- figure 1 is an exploded prospective view of an integrated tank-air filter assembly according to the present invention,
- figures 2 and 3 are perspective views taken from different angles of the integrated tank-air filter assembly of figure 1,
- figure 4 is a partially sectioned perspective view and in enlarged scale of the portion indicated by the arrow IV in figure 3,
- figure 5 is a section taken on the line V-V of figure 3,
- figure 6 is a detail in enlarged scale of the portion indicated by the arrow VI in figure 5,
- figure 7 is a perspective view showing the filter self-cleaning system according to the invention, and
- figure 8 shows the integrated tank-air filter assembly according to the present invention on which a cyclone pre-filter is assembled.

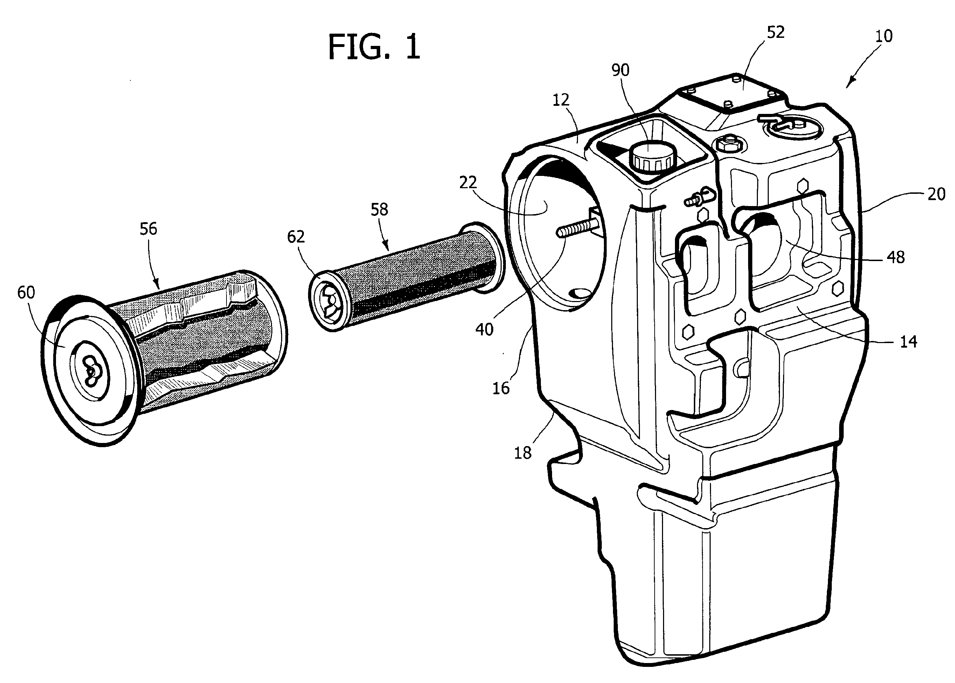

With reference to figures 1-3, reference 10 indicates a fuel tank for a vehicle, in particular for a tractor. The tank 10 is preferably formed of rotoformed plastic material. The tank 10 has an upper side 12, a front side 14, a rear side 16 and two lateral sides 18, 20. The tank 10 is assembled in the front portion of a tractor. In the assembled condition on the tractor, the tank 10 is arranged with its upper side 12 facing upwards and with its front side 14 facing towards the front portion of the vehicle, preferably in correspondence with the front end of the tractor. The tank 10 is formed by a monolithic wall of moulded plastic material. The wall of the tank 10 defines a cylindrical cavity 22 with ends open on sides 18, 20.

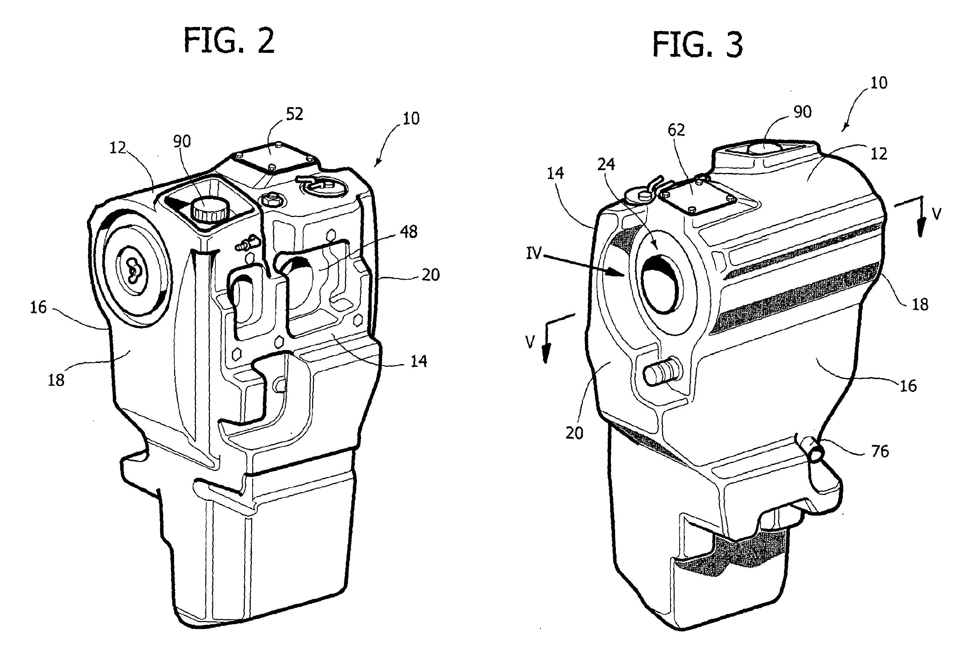

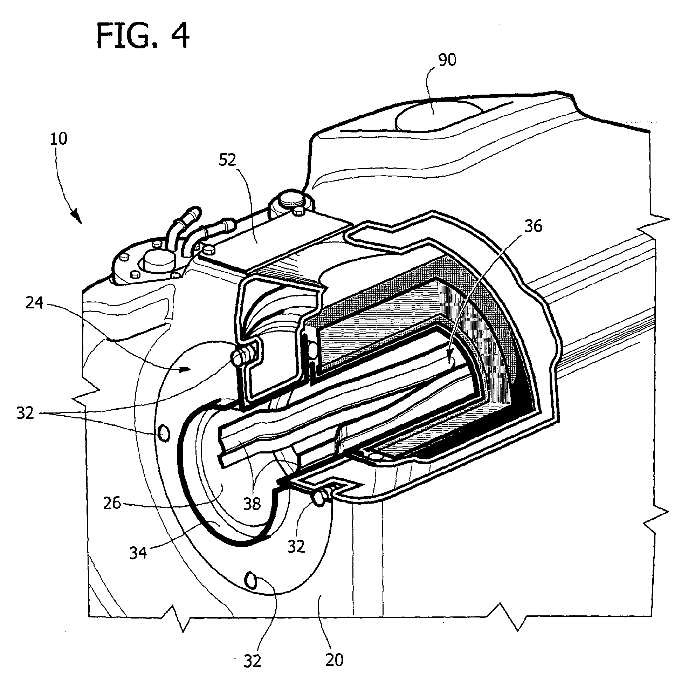

With reference to figures 3, 4 e 5, a metal flange 24 is applied in correspondence with the end of the opening 22 on the lateral side 20. The metallic flange 24 has a cylindrical wall 26, a radial external wall 28 and a radial internal wall 30. The radial walls 28, 30 face respectively outside the tank and inside the cavity 22. The plate 28 is provided with treaded blind inserts 32 that serve for clamping a duct for delivering filtered air to the engine. The cylindrical wall 26 of the metallic flange 24 has an extension 34 that protrudes from the external side of the tank, forming a tubular edge for the connection of the delivery duct for the filtered air.

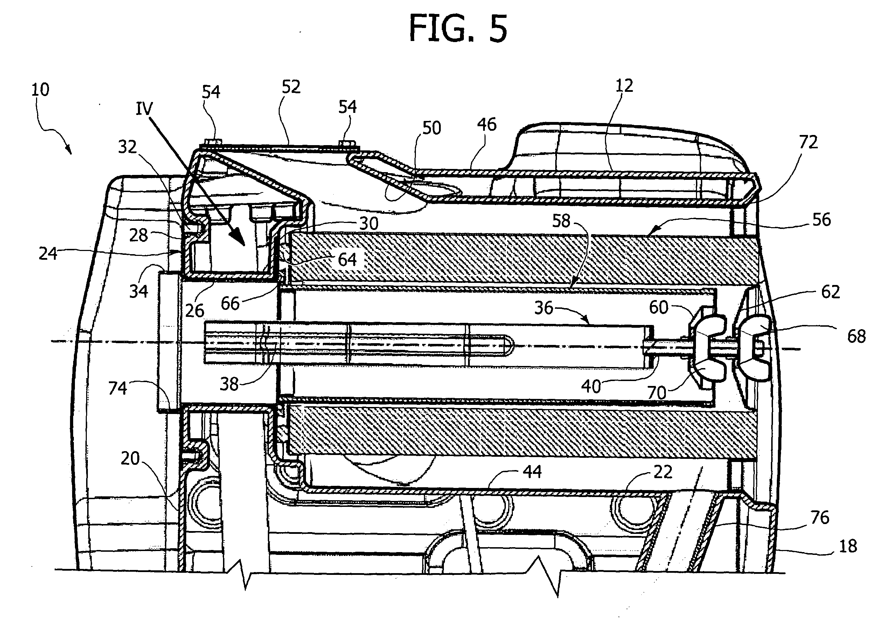

With reference to figures 4 and 5, a clamping element 36 protrudes towards the inner of the cavity 22 along a direction parallel or coincident with the longitudinal axis of the cavity 22. The clamping element 26 is fixed to the metallic flange 24, for example by means of two fork shaped portions fixed, for example by welding, to the cylindrical wall 26 of the flange 24. The clamping element 36 has a treaded rod 40 on a portion opposite to the metallic flange 24.

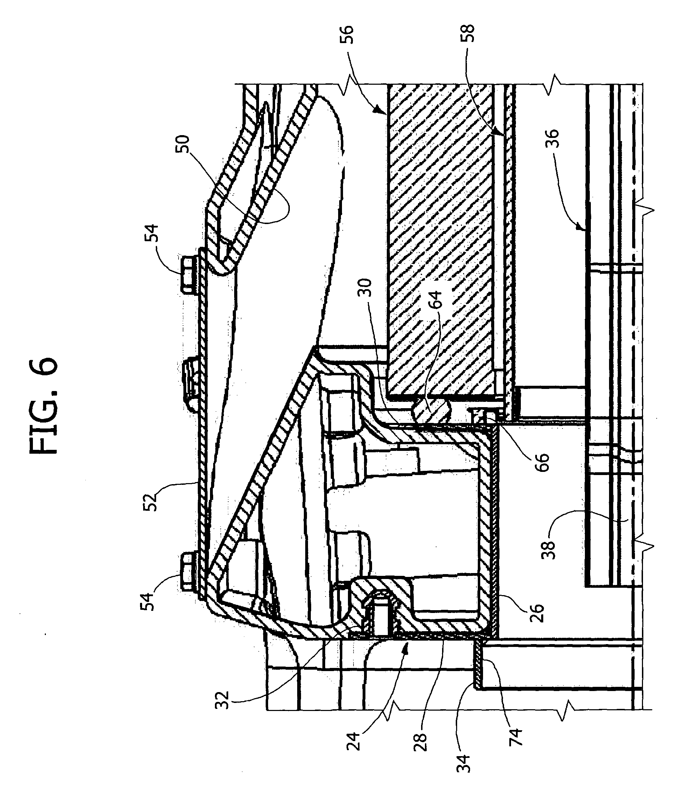

With reference to figure 5, the tank 10 has a wall 44 that isolates the inner volume of the tank from the cavity 22. The wall 44 is obtained in integral shape with the external wall 46 of the tank 10. Preferably, as indicated in the foregoing, the tank 10 is obtained by rotoforming. The metallic flange 24 with the clamping element 36 is positioned in the rotoforming mould before the moulding operation. During the rotoforming the flange 24 is incorporated in the elastic material that forms the walls 44, 46. As can be seen in particular in figures 5 and 6, the wall of plastic material 44 extends in contact with the three walls 26, 28 and 30 of the metallic flange 24.

With reference to figures 1 and 2, the tank 10 is provided with a main opening 48 for the input of the air to be filtered that put the inner volume of the cavity 22 in communication with the external environment. The main opening 48 is preferably formed on the front side 14 of the tank 10. With reference to figure 5, the tank 10 is furthermore provided with an auxiliary opening 50 for the air to be filtered. The auxiliary opening 50, as the main opening 48, puts the inner volume of the cavity 22 in communication with the external environment. Preferably, the auxiliary opening 50 is open on the upper side 12 of the tank and is normally closed by a removable cover 52 fixed to the tank 10, for example by screws 54. On the upper side 12 the tank 10 is also provided with an opening for filling the tank, closed by a cap 90.

With reference to figures 1 and 5, at least one filtering cartridge is housed in the cavity 22 of the tank 10. In the example shown in the figures, there are provided two filtering cartridges of tubular shape indicated by reference numbers 56 and 58 placed coaxially with each other. A first end of the cartridges 56, 58 is provided with a respective metallic bottom 60, 62. On the opposite end of the bottoms 60, 62 the cartridges 56, 58 are provided with respective gaskets 64, 66.

As shown in figure 5, the filtering cartridges 56, 58 are inserted into the cavity 22 and are placed around the clamping element 36. The metallic bottoms 60, 62 are provided with respective holes through which extends the threaded rod 40 of the clamping element 36. Each cartridge 56, 58 is fixed to the element 36 by means of a butterfly nut 60, 70 that engages the threaded rod 40. The bottom 60 of the external cartridge 56 has an external radial portion 72 that is pressed against the edge of the cavity 22. The bottom 60 constitutes therefore a closing element that closes the opening of the cavity 22 facing towards the side 18 of the tank 10. The gaskets 64, 66 of the cartridge 56, 58 are pressed axially against the inner wall 30 of the metallic flange 24. As shown in the detail of figure 6, the metallic wall 30 forms an accurate support surface that ensures that the gaskets of annual shape 64, 66 provided on the cartridges 56, 58 deforms in a regular way, ensuring an efficient seal between the frontal ends of the cartridge 56, 58 and the wall 30.

The annular cartridges 56, 58 divide the inner volume of the cavity 22 in an external wall that communicates with the input opening 48 and 50 and in a inner portion that communicates with an output opening 74 for the filtered airflow.

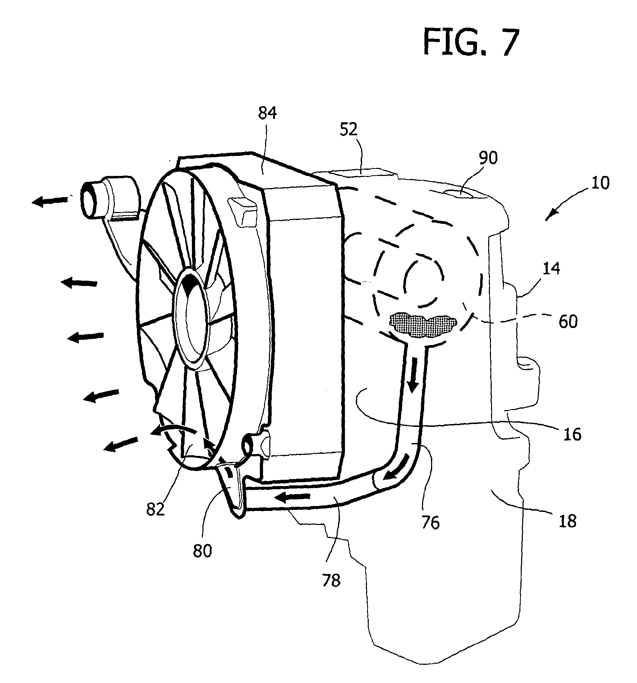

With reference to figure 5 and 7, according to a preferred embodiment of the present invention, the tank 10 is provided with a duct 76 for evacuating the filtered dust that is collected on the bottom of the cavity 22. The duct 76 has an upper end that communicates with the bottom of the cavity 22 and a lower end that flows into the external portion of the tank 10. The lower end of the dust evacuation duct 76 is preferably positioned on the rear side 16 of the tank 10 (see figure 3). As shown in figure 7, the lower end of the duct 76 is connected with a pipe 78 having a discharge end 80 that is located in proximity to the fan 82 associated with the radiator 84 of the vehicle. The discharge end 80 is preferably positioned downstream of the fan with reference to the direction of movement of the airflow produced by the fan 82. In operation, the fan 82 produces a depression that sucks the dust contained in the evacuation duct 76.

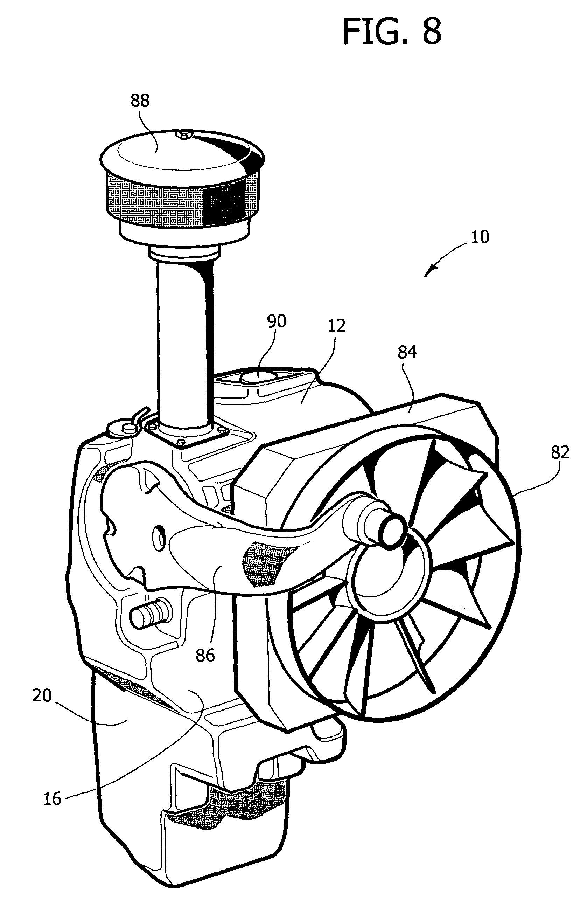

As shown in figure 8, the tank 10 is placed before the radiator 84, with the rear side 16 of the tank 10 facing the front side of the radiator 84. The fan 82 is placed on the rear side of the radiator.

Figure 8 shows a duct 86 for feeding the filtered airflow to the engine. The duct 86 is fixed to the metallic flange 24 by screws that engage the threaded inserts 32.

When operating in environment not particularly dusty, the auxiliary opening 50 is closed by the element 52. In these conditions, the airflow is sucked through the main opening 48 placed on the front side 12 of the tank 10.

When the tractor works in particularly dusty environments, the closing element 52 that closes the auxiliary suck opening 50 is removed and in place of the closing element 52 is provided a pre-filtering cyclone device indicated by 88 in figure 8. The closing element 52 is applied as a closing of the main suck opening 48. In this way, the airflow is subjected to a preliminary filtering from the cyclone filter 88 that avoids a premature saturation of the filtering cartridges 56, 58.

## Claims

1. An integrated tank-air filter assembly for a vehicle, in particular for a tractor, comprising:
- a fuel tank (10) having an external wall (46) and a wall (44) defining a cavity (22) for housing the air filter surrounded by said external wall (46), and
- at least one filtering cartridge (56, 58) housed in said cavity (22),
**characterised in that** the fuel tank (10) comprises two distinct openings (48, 50) for sucking the air to be filtered, each of which puts the inner volume of said cavity (22) in communication with the external environment.

2. Integrated tank-air filter assembly according to claim 1, **characterised in that** the fuel tank (10) has an upper side (12), a front side (14), a rear side (16) and two lateral sides (18, 20) and **in that** a first opening for sucking the air (48) is formed on said front side and the second suck opening (50) is placed on said upper side (12).

3. Integrated tank-air filter assembly according to claim 2, **characterised in that** it comprises a closing element (52) selectively applicable to said first or second opening (48, 50).

4. Integrated tank-air filter assembly according to claim 2, **characterised in that** it comprises a pre-filtering device (88) applicable to said second suck opening (50).

5. Integrated tank-air filter assembly according to claim 1, **characterised in that** it comprises an evacuation duct for the dust (76) having an upper end that communicates with the lower portion of the cavity (22) for housing the air filter and a lower end communicating with the external environment.

6. Integrated tank-air filter assembly according to claim 1, **characterised in that** it comprises a metallic flange (24) applied in correspondence to an end of said cavity (22), the metallic flange (24) having a cylindrical wall (26), an external radial wall (28) and an inner radial wall (30), said cylindrical wall (26) defining an output opening (74) for the filtered airflow.

7. Integrated tank-air filter assembly according to claim 6, **characterised in that** it comprises a clamping element (36) fixed to said metallic flange (24) and provided with means (40) for clamping said at least one cartridge (56, 58).

8. Integrated tank-air filter assembly according to claim 7, **characterised in that** said at least one filtering cartridge (56, 58) has a tubular shape and is provided with a metallic bottom (60, 62) at an end of the cartridge having a hole crossed by a threaded rod (40) of said clamping element (36), the cartridge being fixed to said clamping element (36) by means of a nut (68, 70) engaging said threaded rod (40).

9. Integrated tank-airfilter assembly according to claim 8, **characterised in that** said at least one cartridge (56, 58) is provided with an annular gaskets (64, 66) axially pressed against the inner wall (30) of said metallic flange (24).
